# EUROPEAN PATENT SPECIFICATION

(11) **EP 2 264 349 B1**
(45) Date of publication and mention of the grant of the patent: **05.11.2014**
(21) Application number: 10425192.1
(22) Date of filing: 08.06.2010
(51) Int. Cl.: F16L 37/40, B01D 29/00, E03C 1/02, F16L 37/53

(54) **Use of a quick coupling device for hydraulic pipes**
Benutzung einer Schnellkupplung für Hydraulik-Schlauchleitungen
Utilisation d'un connecteur rapide pour tuyaux hydrauliques

(30) Priority: 08.06.2009 IT MI20090992
(43) Date of publication of application: 22.12.2010
(73) Proprietor: S.G. S.r.L., 28017 San Maurizio d'Opaglio (NO) (IT)
(72) Inventor: Giacomini, Davide, 28017 San Maurizio d'Opaglio (Novara) (IT)
(74) Representative: Kratter, Carlo

(56) References cited:
- EP-A2- 1 793 154
- DE-A1-102004 037 051
- GB-A- 2 263 957
- US-A- 3 306 451
- US-A- 4 327 770
- US-A1- 2004 222 629

## Description

### TECHNICAL FIELD

The present invention regards the use of a device for realizing a hydraulic connection, of a temporary or permanent kind, between a wall-side pipe pertaining to a water supply network and a dispensing apparatus, typically a faucet or a similar device. The device used according to the invention finds application wherever a flexible hydraulic connection for a dispensing apparatus or similar devices, or a quick-coupling and uncoupling device for a hydraulic system, such as for cleaning or maintenance purposes, may be required.

### PRIOR ART

In the course of constructing, servicing or restructuring hydraulic systems, a pipe set into a wall must be connected to faucets or other dispensing devices, through flexible pipes or rigid and semi-rigid curved pipes.

These connections are presently achieved by traditional fixed hookups, such as for instance by using a rigid wall outlet with an extremity mounting a flexible fitting. These connections require the use of suitable wrenches, and properly orienting the pipe may prove difficult. In order to connect the dispensing apparatus to the system, it is moreover necessary to cut off the pressure or add an additional valve to shut off the flow upstream of the outlet.

There are devices, known as quick-coupling fittings, used to facilitate the hookup of flexible pipes to a fixed conduit or faucet.

There is also a known device comprising a body attachable to a water supply network, fitted with a shutter locked by network pressure. This body can, though a bayonet joint, be hooked up to a second body capable of actuating the shutter when in place, and fitted at the extremity with a mouthpiece for flexible pipes. The hookup is achieved by using a clip-on lock passing through slots provided in the outer body.

This device can only be installed on water supply networks under pressure, and fails to allow an instant, one-hand hook-up and detachment. Moreover, such devices allow mounting a cylindrical filter passing a flow of water from the outside to the inside, which causes deposits to coat out on the outer surfaces of the filter. They thus fail to allow an effective cleaning-out of the impurities, even if the filter is removed for this purpose, as part of the sediments will be trapped inside the device. US 4327770 describes a device used for connecting a fuel tank to a fuel line of an outboard motor. The EP 1793154 describes a device equipped with a quick-coupling joint useful only for pneumatic applications, as it cannot guarantee a seal for the passing of a liquid.

GB 2263957 describes a pipe connector for a shower unit.

It is further known that a wall-side connection of dispensing devices such as bathtub or shower units can only be made after mounting two corresponding wall-side fittings with off-center outlets.

These fittings must be adjusted prior to their attachment, so as to achieve a proper alignment with the fittings of the assembly to be installed, and to ensure a correct horizontal positioning of the faucet. The final installation and pressurizing of the hydraulic system can only be undertaken at a later stage.

The purpose of the invention is to eliminate the rigidity and mounting problems of the devices based on the known art, while favoring a hydraulic hook-up to the dispensing apparatus through fittings freely rotating with respect to the apparatus.

These purposes are achieved by the use of a device according to claim 1.

### DESCRIPTION OF THE INVENTION

The invention will now be described with reference to a preferred yet non-limiting embodiment, as shown in the attached drawings, where:
- Fig. 1 is a cross-section of the device in a coupling position, with a first example of a joint;
- Fig. 2 is a cross-section of the device in Fig. 1, in an uncoupling position;
- Fig. 3 is an exploded view of the device in Fig. 1, which illustrates the components;
- Fig. 4 is a cross-section of a modified joint for bathtub or shower units.

The figures use the same numerical references to denote identical or essentially equivalent parts.

### DESCRIPTION OF A PREFERRED EMBODIMENT

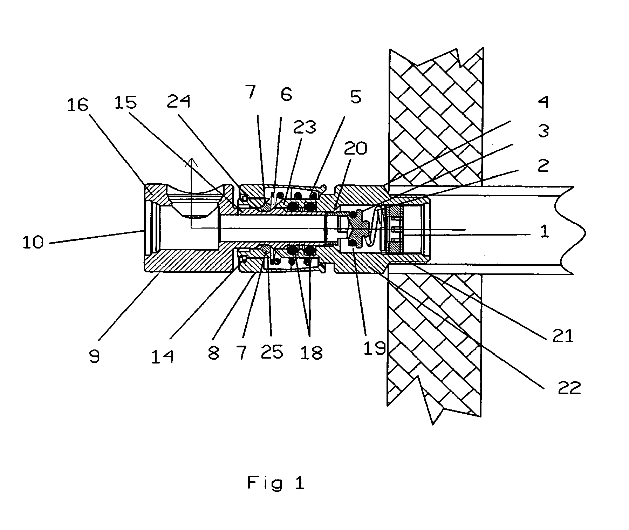

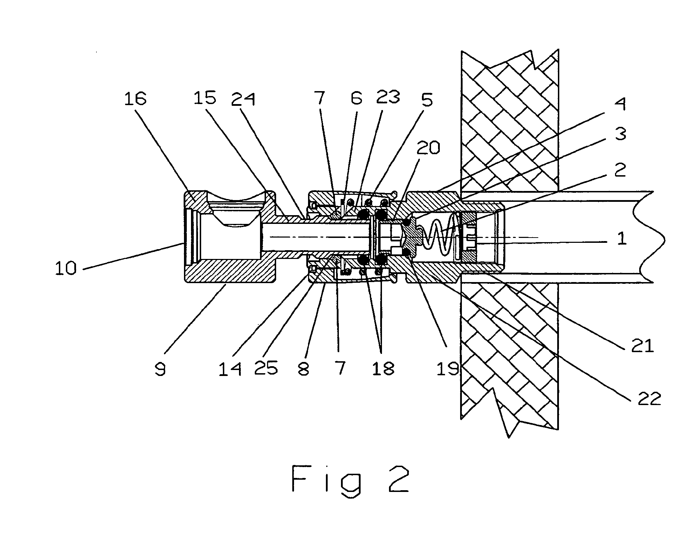

With reference to the Figures 1 and 2, the device used according to the invention comprises a hollow main body or first cylindrical body 4, and a second cylindrical body or so-called joint 9, which can be connected to the former by a quick-coupling and uncoupling mechanism.

These bodies may also have a different shape and composition, capable of adapting to the trade's esthetic requirements.

The body 4 presents a first portion 21, which is open and fitted with a thread to connect the wall-side pipe of a hydraulic network, as schematically outlined in the figure. The body preferably presents a ½" gas thread according to UNI rules and as currently employed as a wall-side piping standard.

An intermediate portion 22 of the body 4 is profiled to house a shutter 3, which is subject to the action of a helical spring 2 held in place by a ring nut 1.

The spring 2 has a preferably conical shape so as to reduce its encumbrance in length within the body 4 and to inhibit the deposition of impurities entrained by the water in its windings, while still guaranteeing an optimum flow of water. The ring nut 1 is threaded onto the body 4 so as to allow adjusting the spring 2 and varying the water flow rate.

The shutter 3 carries an O-ring in its seat and has a final portion 20 which projects, in a closed valve position, outward of the cylindrical seat that the body 4 is fitted into.

The portion 22 further provides for a hexagonally profiled outer surface, designed to allow engaging a suitable key in case of a wall-side mounting.

The body is internally profiled to receive two O-rings 18 destined to operate as a hydraulic seal, whenever the joint 9 is inserted. In its final portion 23, the body 4 is fitted with two diametrically opposed slots 25 that house two cylindrical pins 7.

A helical spring 5 and ringlet 6 are fitted on the portion 23, between the pins 7 and the intermediate portion 22, which acts as a stop for the spring 5. A sliding ring 8 is slipped over the portion 23 and tied-up to the body by a mall outer fastening ring 14, preferably made of steel.

The ring 8 has an appropriately sized front, so as to hide the small ring 14 from view while in a resting position.

The portion 23 is also internally fitted with a hexagonally profiled section 17, so as permit an eventual disassembling in case the faceted outer surface fails to be accessible due to the device's erroneous positioning with respect to the wall-side lining.

The second cylindrical body or joint 9 is formed by a hollow cylindrical section having a first diameter 15 to act as an opening actuator for the shutter 3 as well as to simultaneously establish a hydraulic seal at the two O-rings 18, and by a cylindrical portion having a greater and differently profiled diameter with respect to the function it is supposed to fulfill or the type of connection it must provide.

A groove 24 with a truncated conical cross-section is arranged on the body 15, so as to allow it to be coupled to the body 4.

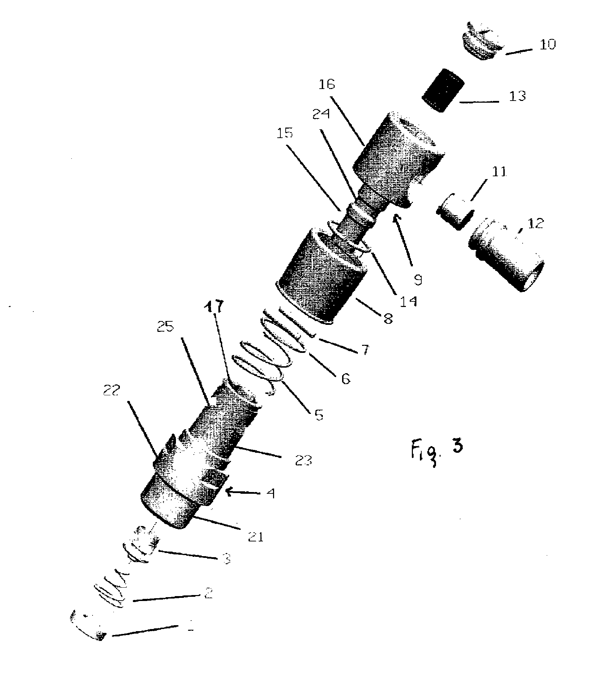

With particular reference to figure 3, the joint 9 presents a laterally perforated portion 16 designed to house a threaded fitting 12 for the rigid or flexible pipe to be inserted therein. The latter may advantageously house a check-valve 11 in its interior, which prevents any residual water still present in the sanitary valve from flowing out of the joint whenever the latter happens to be unhooked. The fitting 12 is capable of rotating with respect to the body 4, so as to allow an optimum positioning of the rigid or flexible pipe hooked up to the same.

For connecting to a flexible piping, the latter is fitted at its extremity with a threaded ring nut, while for connecting to a semi-rigid piping, such as for instance made of copper, a dual cone and plug-type joint is employed, as in a known manner.

The free extremity of the joint 9 is formed by an opening fitted with a closing plug 10, which preferably presents a large slit to allow its removal without using a screwdriver, and which also fulfils a function as a filter carrier. The joint or second body 9 houses in fact a cylindrically shaped filter 13 with one open extremity coaxial with the body 9, whose interior is designed to catch and trap the impurities entrained in the water flowing to the dispensing apparatus.

An annular rosette (not shown) with an appropriate internal diameter may be provided to cover the piping and also to be installed in a phase following that of mounting the device on the wall, thanks to the fact that the device has a constant diameter. The rosette can, if necessary, easily be replaced by a rosette of a larger diameter, without requiring a disassembly of the device itself.

The various bodies are made of a metallic material, preferably of brass, and coated with a protective chrome layer.

The hooking-up and unhooking of the device is done as follows.

The wall-side piping coming from the hydraulic system is connected to the portion 21 of the fitting 4, while the flexible or rigid piping is connected to the joint 9.

During the hooking-up phase, the joint 9 is inserted into the body 4 by a single and simple gesture and while applying an axial pressure. The cylindrical portion 15 then encounters the OR 18 and pushes forward on the shutter 3, while the pins are locking the device inside the hollow 24 provided in the diameter 15, thereby fastening the two parts.

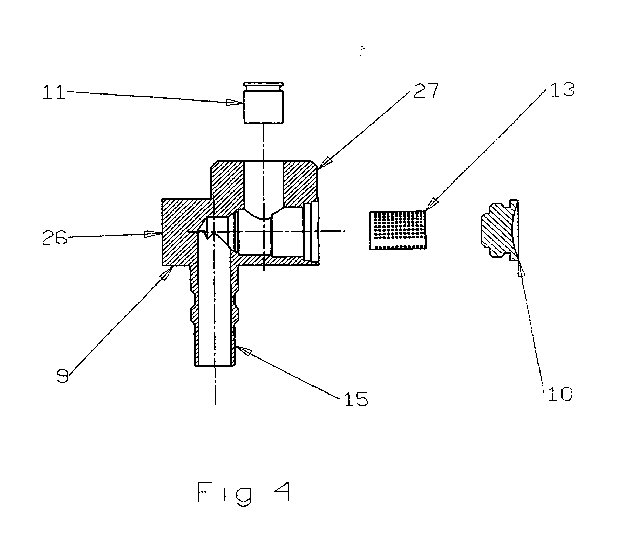

In order to unhook the device, an axial pressure applied to the mobile ring 8 acts on the pins 7 in the slots 25 opposing the spring 5, and releases the joint 9. At the same time, the flow of water is interrupted as a result of the action of spring 2, which returns the shutter 3 to its closing position. The plug 10 may be unscrewed, for instance by using a coin, so as to extract the filter and pursue the cleaning operation by voiding it of the impurities that may have lodged in the same. With particular reference to the Figure 4, it has been found that the invention may also find application for bathtub or shower units, by providing a different orientation of the exit fitting 12, and consequently also of the filter 13. This example shows a joint 9 that provides a laterally perforated portion 26 designed to fit a filter 13 and equipped with a closing plug 10, which also fulfils a role as a filter holder. A threaded fitting 27 is eccentrically arranged with respect to the jointing axis 15, which is appropriately sized and fitted with means to insert a flexible or rigid piping to be connected or coupled to a fitting of a bathtub or shower unit. The latter may conveniently house a return check-valve in its interior, which prevents the residual water from flowing out of the joint once the latter has been released. The fitting is capable of rotating with respect to the body 4, so as to allow the rigid or flexible pipe connected to it to be optimally positioned, or to establish the proper distance between the axes and alignment with another fitting of the same type, in the event of using bathtub or shower units.

The advantages of this device used according to the invention are of a multifold type.

In the first place, the assembling of body 4 in place of traditional closing plugs in a hydraulic network setting-up stage allows drawing on the water available in the system at any moment, thanks to an appropriate joint, or measuring the system pressure with a gauge. The spring 2 guarantees a fluid seal in the valve even in the absence of any water pressure in the system.

The shuttering action is doubly achieved by the O-ring seal 19, which acts on the conical portion provided in the body 4, and the first O-ring 18 that is encountered by the appropriately sized final cylindrical portion 27 in the closing stage.

While working on two converging slopes, the cylindrical pins 7 allow a safer and easier, leak-proof hook-up in joint 9, as compared to a solution based on radial spheres capable of being used in fittings of this type, but not as inexpensive and subject to depositing impurities that are difficult to remove from the seating spaces between the spheres.

The two O-rings 18 improve the sealing action and guarantee, even during a joint inserting phase, that a preliminary seal will be provided on the cylindrical extremity 15, at a time when the shutter 3 has still not been actuated from the same extremity. This prevents even a minimal outflow of water in the device's hooking-up or unhooking phase.

The assembling of the joint 9 may be realized with the aid of wrenches. It is in fact inserted into the body 4 by a slight pressure, which simultaneously allows the flow of water to be opened up to the sanitary faucet.

In case of a connection to a sanitary faucet, this can therefore occur by adjusting the position of the flexible or rigid piping by a simple rotating action on the coupling 9 or fitting 12, while allowing the flexible piping to assume an appropriate curvature and preventing the copper piping from being subjected to bends or restrictions.

In the case of a connection to bathtub or shower units, the fitting 27 can be turned with respect to the body 4, so as to establish the proper distance between centers and alignment with a fitting of the same type.

The unhooking of joint 9 also instantly and automatically stops the flow of water, while the check valve prevents the residual water present in the sanitary faucet from leaving the joint.

In order to prevent obstructions, the filter 13 inserted into the plug 10 can be cleaned with the greatest ease, as all the impurities collect in the same.

## Claims

1. Use of a quick-coupling device for realizing a hydraulic connection between a wall- side pipe pertaining to a water supply network and a dispensing apparatus, wherein said quick coupling device comprises: a first body (4) fitted at one extremity with a thread, and fitted with a shutter (3) pushed into a closing position by elastic means (2), and a second body or joint (9) connected to an outlet fitting (12, 27), equipped: with a first hollow portion (15) which is cylindrical, that acts to open the shutter (3), and has a groove (24) for coupling to said first body (4), wherein said second body or joint (9) is rotating and comprises: a second hollow portion (16) which is laterally perforated for radially connecting to said outlet fitting and houses a cylindrical filter (13) receiving water from the water supply network; **characterized in that** said one extremity with a thread of said first body (4) is connected to said wall side pipe pertaining to a water supply network, and that a rigid or flexible pipe connected to said dispensing apparatus is hooked up to said outlet fitting (12, 27) of said second body or joint (9).

2. Use of a quick-coupling device for realizing a hydraulic connection between a wall- side pipe pertaining to a water supply network and a dispensing apparatus, according to claim 1, **characterized by** unscrewing a plug (10) of the second hollow portion (16) of the second body or joint (9) and extracting the filter (13) from said second hollow portion (16) for cleaning said filter.

3. Use of a quick-coupling device for realizing a hydraulic connection between a wall- side pipe pertaining to a water supply network and a dispensing apparatus, according to claim 1, **characterized by** rotating the outlet fitting (12) with respect to the first body (4) so as to allow an optimum positioning of the rigid or flexible pipe hooked up to said outlet fitting(12).

4. Use of a quick-coupling device for realizing a hydraulic connection between a wall- side pipe pertaining to a water supply network and a dispensing apparatus, according to claim 1, **characterized by** connecting the outlet fitting (12) to a flexible pipe with a threaded ring nut fitted at an extremity of said flexible pipe.

5. Use of a quick-coupling device for realizing a hydraulic connection between a wall- side pipe pertaining to a water supply network and a dispensing apparatus, according to claim 1, **characterized by** connecting the outlet fitting (12) to a semi rigid pipe with a dual cone and plug type joint.

6. Use of a quick-coupling device for realizing a hydraulic connection between a wall- side pipe pertaining to a water supply network and a dispensing apparatus, according to claim 1, **characterized by** housing a check valve 11 in the interior of the outlet fitting (12).

7. Use of a quick-coupling device for realizing a hydraulic connection between a wall- side pipe pertaining to a water supply network and a dispensing apparatus, according to claim 1, wherein said outlet fitting is a threaded fitting (27), is eccentrically arranged with respect to a jointing axis (15) of said first and second bodies (4, 9) and is fitted with inserting means, **characterized by** inserting a flexible or rigid pipe to be connected or coupled to a fitting of a bathtub or shower unit, in said inserting means.

8. Use of a quick-coupling device for realizing a hydraulic connection between a wall- side pipe pertaining to a water supply network and a dispensing apparatus, according to claim 7, **characterized by** housing a return check valve in the interior of the inserting means.

9. Use of a quick-coupling device for realizing a hydraulic connection between a wall- side pipe pertaining to a water supply network and a dispensing apparatus, according to claim 7, **characterized by** rotating the threaded fitting (27) with respect to the first body (4), so as to allow a rigid or flexible pipe connected to said threaded fitting (27), to be optimally positioned or to establish a proper distance between axes and alignment with an another fitting of the same type when using bathtub or shower units.

10. Use of a quick-coupling device for realizing a hydraulic connection between a wall- side pipe pertaining to a water supply network and a dispensing apparatus, according to claim 1, **characterized in that** said device is used in the course of constructing, servicing or restructuring hydraulic systems, when a pipe set into a wall must be connected to faucets or other dispensing devices, through flexible pipes or rigid and semi rigid curved pipes.

## Patentansprüche

1. Benutzung einer Schnellkupplungsvorrichtung zur Durchführung einer hydraulischen Verbindung zwischen einem zu einem Wasserrohrnetz gehörenden Wandrohr und einem Lieferungsgerät, wobei die genannte Schnellkupplungsvorrichtung einen ersten Körper (4) umfasst, der an einem Ende mit einem Gewinde ausgerüstet ist und der mit einer in die Schließstellung durch elastische Mittel (2) gepressten Verschlussklappe (3) ausgerüstet ist, und einen zweiten Körper oder Verbindungsteil (9), mit einem Auslaufanschluss (12, 27) verbunden und mit einem ersten hohlen, zylindrischen Teil (15) ausgerüstet, der die Verschlussklappe (3) öffnet und eine Ausnehmung (24) zur Kupplung mit dem genannten ersten Körper (4) hat, wobei der genannte zweite Körper oder Verbindungsteil (9) umdreht und einen zweiten hohlen Teil (16) umfasst, der zur radialen Verbindung mit dem genannten Auslaufanschluss seitlich durchlocht ist und der einen zylindrischen Filter (13) aufnimmt, um Wasser aus dem Wasserrohrnetz zu bekommen; **dadurch gekennzeichnet, dass** das genannte Ende durch ein Gewinde des genannten ersten Körpers (4) mit dem genannten zu einem Wasserrohrnetz gehörenden Wandrohr verbunden ist und dass ein steifes oder flexibles Rohr verbunden mit dem genannten Lieferungsgerät an dem genannten Auslaufanschluss (12, 27) des genannten zweiten Körpers oder Verbindungsteils (9) angehakt ist.

2. Benutzung einer Schnellkupplungsvorrichtung zur Durchführung einer hydraulischen Verbindung zwischen einem zu einem Wasserrohrnetz gehörenden Wandrohr und einem Lieferungsgerät, nach Anspruch 1, **gekennzeichnet durch** das Abschrauben eines Stöpsels (10) des zweiten hohlen Teils (16) des zweiten Körpers oder Verbindungseils (9) und **durch** das Herausziehen des Filters (13) aus dem genannten zweiten hohlen Teil (16) zur Reinigung des Filters.

3. Benutzung einer Schnellkupplungsvorrichtung zur Durchführung einer hydraulischen Verbindung zwischen einem zu einem Wasserrohrnetz gehörenden Wandrohr und einem Lieferungsgerät, nach Anspruch 1, **gekennzeichnet durch** die Drehung des Auslaufanschlusses (12) im Vergleich zu dem ersten Körper (4), so dass das an dem genannten Auslaufanschluss (12) angehakte steife oder flexible Rohr optimal angeordnet werden kann.

4. Benutzung einer Schnellkupplungsvorrichtung zur Durchführung einer hydraulischen Verbindung zwischen einem zu einem Wasserrohrnetz gehörenden Wandrohr und einem Lieferungsgerät, nach Anspruch 1, **gekennzeichnet durch** die Verbindung des Auslaufanschlusses (12) mit einem flexiblen Rohr, mit einer an einem Ende des genannten flexiblen Rohres ausgerüstete Ringmutter mit Gewinde.

5. Benutzung einer Schnellkupplungsvorrichtung zur Durchführung einer hydraulischen Verbindung zwischen einem zu einem Wasserrohrnetz gehörenden Wandrohr und einem Lieferungsgerät, nach Anspruch 1, **gekennzeichnet durch** die Verbindung des Auslaufanschlusses (12) mit einem halbsteifen Rohr mit einem doppelten Kegel und Verbindungsteil der Art eines Stöpsels.

6. Benutzung einer Schnellkupplungsvorrichtung zur Durchführung einer hydraulischen Verbindung zwischen einem zu einem Wasserrohrnetz gehörenden Wandrohr und einem Lieferungsgerät, nach Anspruch 1, **gekennzeichnet durch** die Aufnahme eines Rückschlagventils 11 innerhalb des Auslaufanschlusses (12).

7. Benutzung einer Schnellkupplungsvorrichtung zur Durchführung einer hydraulischen Verbindung zwischen einem zu einem Wasserrohrnetz gehörenden Wandrohr und einem Lieferungsgerät, nach Anspruch 1, wobei der genannte Auslaufanschluss ein Anschluss mit Gewinde (27), exzentrisch zu einer Verbindungsachse (15) zwischen dem genannten ersten und dem genannten zweiten Körper (4, 9) angeordnet und mit Einsetzmitteln ausgerüstet ist, **gekennzeichnet durch** das Einsetzen in die genannten Einsetzmittel von einem flexiblen oder steifen Rohr, das mit einem Anschluss einer Badewanne oder einer Dusche zu verbinden oder zu kuppeln ist.

8. Benutzung einer Schnellkupplungsvorrichtung zur Durchführung einer hydraulischen Verbindung zwischen einem zu einem Wasserrohrnetz gehörenden Wandrohr und einem Lieferungsgerät, nach Anspruch 7, **gekennzeichnet durch** die Aufnahme eines Rückschlagventils innerhalb der Einsetzmittel.

9. Benutzung einer Schnellkupplungsvorrichtung zur Durchführung einer hydraulischen Verbindung zwischen einem zu einem Wasserrohrnetz gehörenden Wandrohr und einem Lieferungsgerät, nach Anspruch 7, **gekennzeichnet durch** die Drehung des Anschlusses mit Gewinde (27) im Vergleich zu dem ersten Körper (4), so dass ein steifes oder flexibles Rohr verbunden mit dem genannten Anschluss mit Gewinde (27) optimal angeordnet werden kann oder ein anpassender Abstand zwischen den Achsen festgestellt werden kann und die Ausrichtung mit einem anderen Anschluss derselben Art gewährleistet werden kann, wenn eine Badewanne oder eine Dusche benutzt wird.

10. Benutzung einer Schnellkupplungsvorrichtung zur Durchführung einer hydraulischen Verbindung zwischen einem zu einem Wasserrohrnetz gehörenden Wandrohr und einem Lieferungsgerät, nach Anspruch 1, **dadurch gekennzeichnet, dass** die genannte Vorrichtung bei der Herstellung, der Wartung oder der Umstrukturierung von hydraulischen Systemen, bei der Verbindung eines in eine Wand eingesetzten Rohres mit einem Hahn oder anderen Lieferungsvorrichtungen durch flexible Rohre oder steife und halbsteife gebogene Rohre benutzt wird.

## Revendications

1. Utilisation d'un dispositif d'accouplage rapide pour réaliser une liaison hydraulique entre un tuyau du côté de la paroi appartenant à un réseau de fourniture de l'eau et un appareil de distribution, ledit dispositif d'accouplage rapide comprenant: un premier corps (4) équipé d'un filet à une extrémité et équipé d'un volet (3) pressé dans sa position de fermeture par des moyens élastiques (2), et un deuxième corps ou joint (9) lié à un raccord de sortie (12, 27) équipé d'une première portion creuse (15) cylindrique, qui sert à ouvrir le volet (3) et qui a une rainure (24) pour l'accouplement audit premier corps (4), ledit deuxième corps ou joint (9) étant rotatif et comprenant: une deuxième portion creuse (16) qui est perforée latéralement pour se relier radialement audit raccord de sortie et qui loge un filtre cylindrique (13) recevant l'eau du réseau de fourniture de l'eau; **caractérisé en ce que** ladite une extrémité avec un filet dudit premier corps (4) est liée audit tuyau du côté de la paroi appartenant à un réseau de fourniture de l'eau et **en ce qu'**un tuyau rigide ou flexible lié audit appareil de distribution est accroché audit raccord de sortie (12, 27) dudit deuxième corps ou joint (9).

2. Utilisation d'un dispositif d'accouplage rapide pour réaliser une liaison hydraulique entre un tuyau du côté de la paroi appartenant à un réseau de fourniture de l'eau et un appareil de distribution, selon la revendication 1, **caractérisé par** le dévissage d'une prise (10) de la deuxième portion creuse (16) du deuxième corps ou joint (9) et par l'extraction du filtre (13) de ladite deuxième portion creuse (16) pour nettoyer ledit filtre.

3. Utilisation d'un dispositif d'accouplage rapide pour réaliser une liaison hydraulique entre un tuyau du côté de la paroi appartenant à un réseau de fourniture de l'eau et un appareil de distribution, selon la revendication 1, **caractérisé par** la rotation du raccord de sortie (12) par rapport au premier corps (4) de façon à permettre la mise en place optimale du tuyau rigide ou flexible accroché audit raccord de sortie (12).

4. Utilisation d'un dispositif d'accouplage rapide pour réaliser une liaison hydraulique entre un tuyau du côté de la paroi appartenant à un réseau de fourniture de l'eau et un appareil de distribution, selon la revendication 1, **caractérisé par** la liaison du raccord de sortie (12) à un tuyau flexible avec un écrou annulaire fileté équipé à une extrémité dudit tuyau flexible.

5. Utilisation d'un dispositif d'accouplage rapide pour réaliser une liaison hydraulique entre un tuyau du côté de la paroi appartenant à un réseau de fourniture de l'eau et un appareil de distribution, selon la revendication 1, **caractérisé par** la liaison du raccord de sortie (12) à un tuyau semi-rigide avec un cône double et un joint du type à prise.

6. Utilisation d'un dispositif d'accouplage rapide pour réaliser une liaison hydraulique entre un tuyau du côté de la paroi appartenant à un réseau de fourniture de l'eau et un appareil de distribution, selon la revendication 1, **caractérisé par** le logement d'un clapet anti-retour 11 à l'intérieur du raccord de sortie (12).

7. Utilisation d'un dispositif d'accouplage rapide pour réaliser une liaison hydraulique entre un tuyau du côté de la paroi appartenant à un réseau de fourniture de l'eau et un appareil de distribution, selon la revendication 1, où ledit raccord de sortie est un raccord fileté (27), agencé excentriquement par rapport à un axe de jonction (15) desdits premier et deuxième corps (4, 9), et est équipé de moyens d'enclenchement, **caractérisé par** l'insertion, dans lesdits moyens d'enclenchement, d'un tuyau flexible ou rigide à lier ou à accoupler à un raccord d'une baignoire ou d'une douche.

8. Utilisation d'un dispositif d'accouplage rapide pour réaliser une liaison hydraulique entre un tuyau du côté de la paroi appartenant à un réseau de fourniture de l'eau et un appareil de distribution, selon la revendication 7, **caractérisé par** le logement d'un clapet anti-retour à l'intérieur des moyens d'enclenchement.

9. Utilisation d'un dispositif d'accouplage rapide pour réaliser une liaison hydraulique entre un tuyau du côté de la paroi appartenant à un réseau de fourniture de l'eau et un appareil de distribution, selon la revendication 7, **caractérisé par** la rotation du raccord fileté (27) par rapport au premier corps (4), de façon à permettre la mise en place optimale d'un tuyau rigide ou flexible lié audit raccord fileté (27) ou l'établissement d'une distance appropriée entre les axes et l'alignement avec un autre raccord du même type quand une baignoire ou une douche est utilisée.

10. Utilisation d'un dispositif d'accouplage rapide pour réaliser une liaison hydraulique entre un tuyau du côté de la paroi appartenant à un réseau de fourniture de l'eau et un appareil de distribution, selon la revendication 1, **caractérisé en ce que** ledit dispositif est utilisé pendant la construction, le maintien ou la restructuration de systèmes hydrauliques, lorsqu'un tuyau introduit dans une paroi doit être lié à des robinets ou à d'autres dispositifs de distribution, par le biais de tuyaux flexibles ou de tuyaux courbés rigides et semi-rigides.
